# EUROPÄISCHE PATENTSCHRIFT

(11) **EP 3 020 691 B1**
(45) Veröffentlichungstag und Bekanntmachung des Hinweises auf die Patenterteilung: **21.02.2018**
(21) Anmeldenummer: 15202071.5
(22) Anmeldetag: 04.09.2014
(51) Int. Cl.: C04B 26/18, C04B 28/02, C04B 28/10, C04B 28/14, C04B 28/16, C04B 40/00, C04B 26/00, C04B 26/14, C08G 59/42, C08G 59/68, C08L 63/00, C08L 3/02, C08L 91/00, C04B 111/27, C04B 111/28

(54) **AUS UNTERSCHIEDLICHEN WERKSTOFFEN HERSTELLBARER VAKUUMBAUSTEIN**
VACUUM MODULE WHICH CAN BE MANUFACTURED FROM DIFFERENT MATERIALS
BLOC DE CONSTRUCTION A VIDE POUVANT ETRE FABRIQUE EN DIFFERENTES MATIERES

(30) Priorität: 11.09.2013 DE 202013104133 U; 20.06.2014 DE 202014102825 U
(43) Veröffentlichungstag der Anmeldung: 18.05.2016
(62) Teilanmeldung aus: 14183603.1
(73) Patentinhaber: Sorge, Günther, 37581 Bad Gandersheim (DE)
(72) Erfinder: Sorge, Michael, 37581 Bad Gandersheim (DE)
(74) Vertreter: RGTH

(56) Entgegenhaltungen:
- EP-A2- 2 364 961
- WO-A1-97/19031
- WO-A1-03/040217
- WO-A2-2008/058588
- DE-A1- 2 054 876
- DE-A1- 3 319 675
- DE-A1- 3 426 239
- DE-A1- 10 105 478
- DE-A1- 19 701 916
- DE-A1- 19 812 247
- DE-A1-102011 119 219
- DE-U1- 8 912 522
- US-A- 4 579 891
- US-A- 6 121 398
- US-A1- 2011 275 761
- US-A1- 2012 302 672

## Beschreibung

### Technisches Gebiet

Die Erfindung betrifft einen aus zwei alternativen Materialien gefertigten Baustein und ein Verfahren zu deren Herstellung.

### Stand der Technik

Polymerbeton unterscheidet sich von herkömmlichem Beton unter anderem dadurch, dass das Materialgemisch des Polymerbetons Kunststoff oder Kunststoffe enthält. Polymerbeton, im folgenden auch Polymerbetonsystem genannt, erfordert keine Stahlbewährung, da dieser allein aus der Reaktionsklebung Biegezugwerte von 10 Nm/mm² und mehr sowie Druckwerte von 30 Nm/mm² und mehr erreichen oder sogar übersteigen kann. Deshalb sind Polymerbetonsysteme gut geeignet für Reparaturarbeiten, insbesondere für kleinflächige Reparaturarbeiten und Anwendungen aller Art, bei denen eine Stahlbewährung aufwendig und teuer wäre.

Polymerbetonsysteme basieren in der Regel auf mineralölhaltigen Harzen. Die Harz-/Härtesysteme verwenden hochtoxische Stoffe, wie beispielsweise Bisphenol A oder Epichlorhydrin. Die Systeme enthalten Lösemittel und sind aus diesen Gründen in der Regel im nicht reagierten Zustand allergen, cancerogen und allgemein toxisch und deshalb als Gefahrgut einzustufen. Aus diesem Grund ist die Handhabung schwierig, beziehungsweise zumindest eingeschränkt und nur teilweise oder zu hohen Kosten möglich. Des Weiteren sind diese Systeme zwar wasserfest aber in nur sehr eingeschränktem Temperaturbereich temperaturbeständig. Beispielsweise ist das Material in der Regel zwischen -40 °C bis +100 °C temperaturbeständig und resistent gegen aggressive Flüssigkeiten. Derartige Polymerbetonsysteme sind allerdings keineswegs feuerfest oder flammfest und somit für bestimmte Anwendungen nicht geeignet.

Des Weiteren existieren Polymerwerkstoffe, insbesondere auch Polymerbetonsysteme, auf Basis pflanzlicher Epoxide. Derartige Werkstoffe haben allerdings eine geringere Festigkeit und weisen eine langsamere Reaktionsgeschwindigkeit auf. Bei Verwendung von kostengünstigen und in ausreichender Masse verfügbarer Epoxidharze, sind derartige Systeme somit ebenfalls für bestimmte und spezielle Anwendungen nicht geeignet.

Des Weiteren ist die Anwendung derartiger Werkstoffe basierend auf pflanzlichen Epoxiden oft kompliziert, da exakte und eng begrenzte Mischverhältnisse eingehalten werden müssen. Ferner werden oft aufwendige Vormischungen gefordert, die in der Regel erst vor Ort bei der Anwendung hergestellt werden können. Des Weiteren muss im Allgemeinen auf Restfeuchte im Material oder der Umgebung bei Anwendung geachtet werden, weil diese die Reaktion negativ beeinträchtigen können. Bei erhöhten Außentemperaturen weisen derartige Systeme nur sehr kurze Topfzeiten auf, die die fachgerechte Anwendung erschweren oder gar unmöglich machen.

In der DE 10 2006 060 917 A1 wird ein Härtersystem zur Herstellung von gefüllten Polymerbetonen auf Basis nativer Epoxide beschrieben. Das darin beschriebene Härtersystem arbeitet mit einer flüssigen Vormischung.

In der DE 196 27 165 A1 wird ein Polymerwerkstoff sowie ein Verfahren zur Herstellung und dessen Verwendung beschrieben. Hierfür werden verschiedene pflanzliche hochepoxidierte Epoxide mit hohem Sauerstoffgehalt verwendet. Dabei werden Polycarbonsäuren und hochepoxidierte Triglyceride mit verschiedenen Füllstoffen zur Herstellung von Faserplatten und Formteilen und Ähnlichem beschrieben.

Zur Isolierung von Räumen und Gebäuden sind die verschiedensten Dämmtechniken, beispielsweise Verwendung von Glaswolle, Holzfasern, Styropor, Gasbeton, Schüttgut und Naturfasern bekannt.

Des Weiteren sind vakuumbasierte Isoliersysteme, wie sie beispielsweise in der DE 103 59 005 A1 beschrieben sind, bekannt. Darin wird eine Vakuum-Isolations-Platte, bestehend aus einer Faserplatte als Kern und einem darüber gezogenen Aluminiumsack, der verschweißt und vakuumgezogen wird, offenbart. Derartige Vakuum-Isolations-Platten können als Dämmplatten zur Isolierung von beispielsweise Räumen jeglicher Art eingesetzt werden.

DE8912522U1 offenbart einen Wärmedämmkörper in Form eines Bausteins, welcher aus einem gasdichten evakuierten Hohlkörper aus starrem Material, nämlich Glas, Glaskeramik oder Keramik, gebildet ist. Im Inneren des vollumfänglich umschlossenen Hohlraums herrscht ein Unterdruck von kleiner als 50 mbar. Zwei Halbschalen des Körpers werden miteinander verschweißt (=vollumfänglich aus einem einzigen Baustoff), die Evakuierungsöffnung wird durch Zuschmelzen gasdicht verschlossen. DE3426239A1 offenbart einen Wärmedämmkörper in Form eines Hohlbausteins, welcher aus einem gasdichten evakuierten Hohlkörper aus starrem Material, nämlich mit Glasfaserbrei versetztem Gasbeton, gebildet ist. Im Inneren des vollumfänglich umschlossenen Hohlraums herrscht ein Unterdruck (Druckdifferenz 10⁵ Pa).
Die Entlüftung erfolgt durch eine Öffnung, die durch einen elastischen Pfropfen verschlossen wird.

### Darstellung der Erfindung: Aufgabe, Lösung, Vorteile

Aufgabe der vorliegenden Erfindung ist es, eine verbesserte Ausgestaltung eines Bausteins bereitzustellen, wodurch kostengünstig eine erhöhte Dämm- und Isolierwirkung erreicht wird. Ferner liegt die Aufgabe darin, ein Verfahren zur Herstellung eines solchen Bausteins bereitzustellen.

Erfindungsgemäß ist ein Baustein gemäss einem der Ansprüche 1 - 10 oder gemäss einem der Ansprüche 11 - 13 vorgesehen, welcher einen vollumfänglich umschlossenen Hohlraum aufweist. Durch den vollumfänglich umschlossenen Hohlraum wird ein Volumen im Inneren des Bausteines definiert. Der erfindungsgemäße Baustein weist im Hohlraum einen Unterdruck in Bezug auf eine Umgebung bei Normalbedingung auf. Somit weist das durch den vollumfänglich umschlossenen Hohlraum definierte Volumen einen Unterdruck auf. Unter Normalbedingung ist im Sinne dieser Erfindung ein Druck in Höhe von 1.013,25 mbar zu verstehen.

Der Baustein weist einen Polymerwerkstoff auf oder besteht aus diesem Polymerwerkstoff. Dabei ist insbesondere vorgesehen, dass zumindest die Außenfläche des Bausteines vollumfänglich mit diesem Polymerwerkstoff umschlossen ist.

Alternativerweise weist der Baustein einen Baustoff, insbesondere Dispersionswerkstoff, auf oder besteht daraus. Dabei ist insbesondere vorgesehen, dass zumindest die Außenfläche des Bausteines vollumfänglich mit diesem Baustoff umschlossen ist.

Bevorzugterweise ist mindestens ein Hohlraum im Baustein vollumfänglich umschlossen ausgebildet. Es können in einem Baustein auch mehrere voneinander getrennte Hohlräume vollumfänglich umschlossen ausgebildet sein. Besonders bevorzugterweise ist vorgesehen, dass der Baustein im Inneren einen einzigen Hohlraum aufweist, welcher durch sechs Seitenwände beziehungsweise Außenwände des Bausteins vollumfänglich umschlossen ist. Dabei ist bevorzugterweise vorgesehen, dass der Baustein würfelförmig oder quaderförmig ausgebildet ist. Ferner ist der Baustein im Wesentlichen luftdicht umschlossen. Hierunter ist zu verstehen, dass der Unterdruck im Hohlraum des Bausteins für einen größeren Zeitraum, beispielsweise mindestens ein Jahr, ohne größere Veränderung (+/- 50 mbar) aufrechterhalten wird.

Dadurch, dass im Baustein ein Hohlraum mit einem Unterdruck in Bezug auf eine Umgebung bei Normalbedingung vorgesehen ist, kann eine hohe Dämmwirkung erreicht werden. Es ist bekannt, dass die beste Isolierung gegen thermische Übergänge durch Vakuum gebildet werden kann. Durch das Vorsehen eines Unterdruckes im Inneren des Bausteins wird somit eine sehr gute thermische Isolierung erreicht.

Bevorzugterweise ist vorgesehen, dass der Baustein im Hohlraum einen Druck kleiner 800 mbar, besonders bevorzugterweise kleiner als 500 mbar, sowie ganz besonders bevorzugterweise kleiner 300 mbar aufweist. Somit ist ganz besonders bevorzugterweise vorgesehen, dass der Baustein im Hohlraum ein Grobvakuum (zwischen 1 mBar und 300 mBar) aufweist.

Der Baustein weist bevorzugterweise mehrere Teile, besonders bevorzugterweise zwei halbschalenförmige Teile, auf, durch welche der Hohlraum umschlossen wird. Dabei sind die mehreren Teile, beispielsweise die halbschalenförmigen Teile, mittels eines Klebemittels miteinander verklebt. Beispielsweise kann der Baustein aus zwei im Wesentlichen identischen halbschalenförmigen Teilen bestehen, welche an ihren stirnseitigen Kanten, beziehungsweise Stoßflächen, miteinander verklebt sind. Hierbei ist bevorzugterweise vorgesehen, dass das Klebemittel dasselbe Material wie der Baustein beziehungsweise die Teile des Bausteines aufweist. Beispielsweise können sowohl die einzelnen Teile, beispielsweise halbschalenförmigen Teile, sowie auch das Klebemittel aus Beton bestehen.

Ferner ist bevorzugterweise vorgesehen, dass die Stoßflächen der einzelnen Teile des Bausteines Vertiefungen und/oder Erhebungen aufweisen. Beispielsweise könnte die Stoßfläche eines ersten Teils, beispielsweise einer ersten Halbschale, Erhebungen und/oder Vertiefungen aufweisen, wobei das zweite Teil, beispielsweise die zweite Halbschale, korrespondierende Vertiefungen und/oder Erhebungen aufweist. Zum Beispiel könnte die Verbindungsstelle zwischen den beiden Teilen Nut-Feder-Profil-förmig ausgebildet sein. Durch Vorsehen von Erhebungen und Vertiefungen im Bereich der Stoßflächen kann die Kontaktfläche zwischen den Teilen des Bausteines erhöht werden und somit die Stabilität verbessert werden.

Der Baustein weist bevorzugterweise eine Außenfläche auf, welche vollumfänglich aus einem einzigen Baustoff, insbesondere Beton, ausgebildet ist. Dabei ist zumindest die Außenschicht des Bausteines aus einem einzigen Material ausgebildet. Bevorzugterweise besteht die Außenschicht aus demselben Baustoff, wie der Baustein beziehungsweise die einzelnen Teile des Bausteines.

Auch ist bevorzugterweise vorgesehen, dass der Baustein in einer Seitenwand ein Verschlussmittel aufweist, wobei das Verschlussmittel elastisches Material aufweist. Dabei ist das Verschlussmittel zumindest bereichsweise in der Seitenwand, beispielsweise in einer Durchbrechung oder Bohrung durch die Seitenwand, angeordnet. Das elastische Material kann beispielsweise Schaumstoff aufweisen oder aus Schaumstoff bestehen. Ferner ist das elastische Material bevorzugterweise über mehr als die Hälfte, sowie besonders bevorzugterweise über mehr als Dreiviertel der Wanddicke der Seitenwand im Bereich des Verschlussmittels in dieser Seitenwand angeordnet. Das Verschlussmittel besteht somit bevorzugterweise teilweise aus einem elastischen Material, welches über mehr als die Hälfte der Seitenwanddicke, nicht aber über die gesamte Seitenwanddicke in einer Durchbrechung oder Bohrung durch die Seitenwand angeordnet ist. Ferner ist bevorzugterweise vorgesehen, dass das Verschlussmittel zwischen zwei Teilen, beispielsweise zwei halbschalenförmigen Teilen, des Bausteines angeordnet ist.

Dadurch, dass bevorzugterweise ein Verschlussmittel in einer Seitenwand des Bausteines vorgesehen ist, wobei das Verschlussmittel zumindest bereichsweise aus elastischem Material besteht, kann der Unterdruck im Hohlraum des Bausteines bevorzugterweise nach Zusammenfügen beziehungsweise Zusammenkleben der einzelnen Teile, beispielsweise halbschalenförmigen Teile, des Bausteines erzeugt werden. Beispielsweise kann nach Zusammenfügen der einzelnen Teile des Bausteines eine Bohrung durch eine Seitenwand des Bausteines angebracht werden und diese Bohrung zumindest über die Hälfte der Seitenwanddicke mit elastischem und im Wesentlichen luftdichtem Material ausgefüllt werden. Das elastische Material ist mittels eines hohlen stiftförmigen Mittels, beispielsweise eines Metalldochtes, durchstechbar. Daran kann ein Saugtrichter und/oder ein Sauger oder eine Vakuumpumpe, bevorzugterweise mit Manometer, angeschlossen werden und dem Hohlraum Luft entzogen werden und somit ein Unterdruck im Hohlraum des Bausteines erzeugt werden. Nach Entfernen des hohlen stiftförmigen Mittels, beispielsweise des Metalldochtes, aus dem elastischen Material, wird die Öffnung von dem elastischen Material unverzüglich geschlossen gehalten und somit der erzeugte Unterdruck im Hohlraum im Wesentlichen beibehalten.

Das Verschlussmittel ist ferner bevorzugterweise irreversibel in der Seitenwand des Bausteines angeordnet. Dabei ist bevorzugterweise vorgesehen, dass das Verschlussmittel neben dem elastischen Material noch ein Abschlusselement aufweist. Das Abschlusselement kann beispielsweise Klebstoff und/oder Beton aufweisen beziehungsweise aus diesem bestehen. Dadurch kann nach Erzeugung des Unterdruckes im Hohlraum des Bausteines von außen die verbleibende Öffnung zwischen dem elastischen Material in der Durchbrechung oder Bohrung durch die Seitenwand und der Außenfläche der Seitenwand des Bausteines ausgefüllt werden. Das Verschlussmittel ist somit irreversible in der Seitenwand des Bausteines angeordnet, da das Abschlusselement, beispielsweise der Klebstoff und/oder Beton, nur durch Zerstörung entfernt werden kann.

Außerdem weist zumindest eine Seitenwand des Bausteines zwei Bereiche unterschiedlicher Dicke auf. Dabei kann ein erster Bereich mit geringerer Dicke umlaufend und beabstandet zur Außenkante angeordnet sein. Ein zweiter Bereich mit größerer Dicke kann beispielsweise zur Mitte der Seitenwand hin angeordnet sein.

Auch ist bevorzugterweise vorgesehen, dass zumindest eine Seitenwand des Bausteines eine zur Mitte hin abnehmende Dicke aufweist. Beispielsweise kann im Bereich des Überganges zweier Teile, beispielsweise halbschalenförmiger Teile, des Bausteines eine geringste Dicke dieser Seitenwand vorgesehen sein. Besonders bevorzugterweise sind eine erste Seitenwand und eine zweite Seitenwand mit je zwei Bereichen unterschiedlicher Dicke vorgesehen. Des Weiteren sind besonders bevorzugterweise eine dritte und eine vierte Seitenwand mit zur Mitte hin, ganz besonders bevorzugterweise linear, abnehmender Dicke vorgesehen. Dabei kann die geringste Dicke im Übergangsbereich einzelner Teile des Bausteines und/oder im Bereich des Verschlussmittels vorgesehen sein. Diese Formgebung erleichtert die Befüllung des Formteils und die Ausformung des Formteils. Außerdem erhöht es die statische Festigkeit des fertigen Hohlsteins.

Der Polymerwerkstoff, insbesondere ein Polymerbetonsystem, basiert auf nativen, insbesondere auf pflanzlichen, Rohstoffen. Unter nativen Rohstoffen sind im Folgenden insbesondere nachwachsende Rohstoffe zu verstehen. Dabei weist der Polymerwerkstoff, insbesondere das Polymerbetonsystem, eine Baustoffmischung sowie eine Harzkomponente auf.

Sowohl die Baustoffmischung sowie auch die Harzkomponente können separat gefertigt und verpackt sowie gelagert werden. Somit kann der Polymerwerkstoff, insbesondere das Polymerbetonsystem, kurze Zeit vor dessen Verwendung durch Vermischen der Baustoffmischung mit der Harzkomponente hergestellt werden.

Bevorzugterweise weist die Harzkomponente ein natives Epoxid auf Basis eines Pflanzenöls auf. Dabei ist bevorzugterweise vorgesehen, dass es sich bei dem Pflanzenöl um Leinöl, Rapsöl, Sojaöl, Rizinusöl, Drachenkopföl oder Calendulaöl handelt. Somit ist bevorzugt, dass die Harzkomponente beispielsweise ein epoxidiertes Leinöl oder ein anderes Pflanzenöl aufweist.

Das native Epoxid auf Basis eines Pflanzenöls weist bevorzugterweise einen Sauerstoffgehalt von kleiner als 9 %, besonders bevorzugterweise kleiner als 8 % sowie ganz besonders bevorzugterweise kleiner als 7 %, auf.

Bevorzugterweise weist die Harzkomponente das native Epoxid auf Basis eines Pflanzenöls mit einem Massenanteil zwischen 80 % und 90 % der Harzkomponente auf.

Die Harzkomponente weist ferner bevorzugterweise Polycarbonsäureanhydrid, insbesondere Methytetrahydrophtalic-Anhydrid auf, dabei ist bevorzugterweise vorgesehen, dass die Harzkomponente Polycarbonsäureanhydrid mit einem Massenanteil von 5 % bis 20 %, bevorzugterweise zwischen 10 % und 15 %, der Harzkomponente aufweist.

Des Weiteren ist bevorzugt, dass die Harzkomponente einen cationisch härtenden Katalysator aufweist. Dabei ist bevorzugterweise vorgesehen, dass der cationisch härtende Katalysator einen Massenanteil von 0,1 % bis 1,0 % der Harzkomponente aufweist.

Außerdem ist bevorzugt, dass der cationisch härtende Katalysator Triarylsulfoniumhexafluorophosphatesalz und einen Fotoinitiator, insbesondere Propylencarbonat, aufweist. Durch die Verwendung eines cationisch härtenden Katalysators und insbesondere durch die Verwendung eines Fotoinitiators für die Harzkomponente des Polymerwerkstoffs kann die Startreaktion insgesamt beschleunigt und verstärkt werden. Hierbei kann beispielsweise eine oberflächliche Schicht, beispielsweise eine folienartige Schicht, erzeugt werden, wodurch die Produktoberfläche zusätzlich als Polyol gegen Wasser und Säuren abgedichtet und geschützt wird. Das restliche Material härtet in der Reaktion als Polyester aus.

Ferner ist bevorzugt, dass die Harzkomponente bei Raumtemperatur, besonders bevorzugterweise in einem Temperaturbereich zwischen 10 °C und 30 °C, als flüssige Mischung ausgebildet ist. Dabei handelt es sich um eine stabile Flüssigmischung, welche, wie auch die feste Pulvermischung der Baustoffmischung, gut zu lagern und später gut zu verarbeiten ist.

Bevorzugterweise weist die Baustoffmischung einen Massenanteil zwischen 80 % und 95 % des Polymerwerkstoffes, insbesondere des Polymerbetonsystems auf. Des Weiteren ist bevorzugterweise vorgesehen, dass die Harzkomponente einen Massenanteil von 5 % bis 20 % des Polymerwerkstoffs, insbesondere des Polymerbetonsystems, aufweist. Insbesondere durch das Vorsehen eines derartigen Verhältnisses zwischen Harzkomponente und Baustoffmischung, wobei der Anteil der Baustoffmischung wesentlich höher als der Anteil der Harzkomponente ist, kann das Material in kurzer Zeit, beispielsweise in wenigen Minuten, einen formstabilen Zustand und in weniger als einer Stunde bereits 20 % der Endhärte erreichen. Da der Polymerwerkstoff, insbesondere das Polymerbetonsystem bereits nach wenigen Minuten formstabil ist, kann es in einer Vielzahl von Anwendungen verwendet werden. Bei Erreichen einer Härte von 20 % der Endhärte ist das Material beispielsweise bereits begehbar. In weniger als zwölf Stunden erreicht das Material ca. 80 % der Endhärte, wobei die Endhärte (größer als 99 %) bereits nach ca. einer Woche erreicht wird.

Die Baustoffmischung zur Herstellung eines Polymerwerkstoffes, insbesondere des Polymerbetonsystems, weist zumindest eine Härterkomponente und eine Füllstoffkomponente auf. Die Härterkomponente beinhaltet zumindest eine Polycarbonsäure, insbesondere eine Maleinsäure. Zusätzlich zur Polycarbonsäure beinhaltet die Härterkomponente ferner zumindest eine Hydroxycarbonsäure, insbesondere Zitronensäure.

Durch die Verwendung einer derartigen Baustoffmischung zur Herstellung eines Polymerwerkstoffes, insbesondere eines Polymerbetonsystems, kann die Baustoffmischung als Vormischung separat gefertigt, über längere Zeit gelagert und erst vor Ort mit einer Harzkomponente zur Herstellung eines Polymerwerkstoffes, insbesondere Polymerbetonsystems, vermengt werden. Insbesondere dadurch, dass die Härterkomponente zusätzlich zur Polycarbonsäure auch eine Hydroxycarbonsäure, insbesondere Zitronensäure, aufweist, kann die Härtung eines mit dieser Baustoffmischung hergestellten Polymerwerkstoffes, insbesondere Polymerbetonsystems, deutlich beschleunigt werden.

Bevorzugterweise weist die Härterkomponente zusätzlich Polycarbonsäureanhydrid, insbesondere Pyromellitsäuredianhydrid auf. Dabei ist in besonderer Weise bevorzugt, dass der Massenanteil von Polycarbonsäureanhydrid zwischen 20 % und 40 %, sowie ganz besonders bevorzugterweise zwischen 25 % und 35 %, der Härterkomponente aufweist.

Des Weiteren ist bevorzugterweise vorgesehen, dass der Massenanteil der Polycarbonsäure zwischen 30 % und 60 %, ganz besonders bevorzugterweise zwischen 40 % und 50 %, der Härterkomponente aufweist.

Außerdem weist der Massenanteil der Hydroxycarbonsäure vorzugsweise zwischen 10 % und 30 %, ganz besonders bevorzugterweise zwischen 15 % und 25 %, der Härterkomponente auf.

Die Füllstoffkomponente der Baustoffmischung weist bevorzugterweise vorrangig natürliche, trockene mineralische Rohstoffe, beispielsweise körnigen Granit, Sand, Basalat, Kalziumkarbonat, Blähton oder Perlit auf. Besonders bevorzugterweise weist die Füllstoffkomponente Quarzsand auf. Dabei ist unter Quarzsand, Quarzsand mit einer Korngröße zwischen 0,1 mm und 1,0 mm zu verstehen. Ferner ist bevorzugterweise vorgesehen, dass die Füllstoffkomponente Quarzsand mit einem Massenanteil von 10 % bis 30 %, ganz besonders bevorzugterweise zwischen 15 % und 25 %, der Füllstoffkomponente aufweist.

Des Weiteren weist die Füllstoffkomponente ferner bevorzugterweise Quarzsand mit einer besonders kleinen Korngröße auf. Derartiger Quarzsand mit einer besonders kleinen Korngröße wird im Folgenden als Quarzmehl bezeichnet. Dabei ist bevorzugterweise vorgesehen, dass die Füllstoffkomponente Quarzmehl mit einem Massenanteil zwischen 10 % und 20 % der Füllstoffkomponente aufweist. Das Quarzmehl weist dabei eine Korngröße kleiner als 0,074 mm, bevorzugterweise kleiner als 0,037 mm, sowie ganz besonders bevorzugterweise kleiner als 0,0185 mm auf. Hierbei handelt es sich um bevorzugte Höchstwerte der Korngrößen des Quarzmehls.

Somit ist bevorzugterweise vorgesehen, dass Quarzsande verschiedener Körnung je nach Anforderung für die Füllstoffkomponente der Baustoffmischung verwendet werden.

Außerdem ist bevorzugt, dass die Füllstoffkomponente Stärke, vorzugsweise Maisstärke, Kartoffelstärke, Weizenstärke, Reisstärke oder Rosskastanienstärke, aufweist. Besonders bevorzugterweise weist die Füllstoffkomponente Stärke mit einem Massenanteil zwischen 10 % und 20 % der Füllstoffkomponente auf. Durch die Verwendung von Stärke, z. B. Maisstärke, als weiteres Füllmaterial der Füllstoffkomponente kann die Flammfestigkeit und Feuerfestigkeit des Polymerwerkstoffes, insbesondere des Polymerbetonsystems, weiter erhöht werden. Ferner ist ein derartiges Füllmaterial preisgünstig, jederzeit verfügbar und basiert auf pflanzlicher Basis.

Die Füllstoffkomponente weist des Weiteren bevorzugterweise Mörtel auf. Dabei weist der Mörtel ein mineralisches Bindemittel, bevorzugterweise Zement, Gips, Anhydrid, Magnesit oder Lehm und/oder ein organisches Bindemittel auf. Besonders bevorzugterweise weist die Füllstoffkomponente Mörtel in Form von Zementmörtel auf. Ferner ist bevorzugterweise vorgesehen, dass die Füllstoffkomponente Mörtel, insbesondere Zementmörtel, mit einem Massenanteil zwischen 30 % und 70 %, ganz besonders bevorzugterweise zwischen 40 % und 60 %, der Füllstoffkomponente aufweist.

Außerdem ist bevorzugt, dass die Härterkomponente und/oder die Füllstoffkomponente bei Raumtemperatur als trockene Pulvermischung ausgebildet ist, beziehungsweise sind. Unter Raumtemperatur ist im Sinne dieser Erfindung ein Temperaturbereich von 18 °C bis 22 °C zu verstehen. Des Weiteren ist bevorzugterweise vorgesehen, dass die Härterkomponente und/oder die Füllstoffkomponente bei einem Temperaturbereich zwischen 10 °C und 30 °C als trockene Pulvermischung ausgebildet ist, beziehungsweise sind.

Ferner ist bevorzugterweise vorgesehen, dass auch die Baustoffmischung als Vormischung, welche die Härterkomponente und Füllstoffkomponente als Bestandteile aufweist, beziehungsweise bevorzugterweise aus diesen besteht, in den vorgenannten Temperaturbereichen als trockene Pulvermischung ausgebildet ist. Somit kann die Baustoffmischung nicht nur separat gefertigt, sondern auch über sehr lange Zeit gelagert und separat verpackt sein. Des Weiteren ist bevorzugterweise vorgesehen, dass Härterkomponente und Füllstoffkomponente als separate Komponenten gelagert und verpackt sind. Somit können Härterkomponente und Füllstoffkomponente je nach Anwendungsgebiet individuell in einem speziellen Verhältnis zu einer speziellen Baustoffmischung vermischt werden.

Bevorzugterweise weist die Baustoffmischung die Härterkomponente mit einem Massenanteil von 10 % bis 30 % auf. Der Massenanteil der Füllstoffkomponente beträgt bevorzugterweise zwischen 70 % und 90 % der Baustoffmischung.

Durch die Verwendung von nativen Rohstoffen, beziehungsweise Inhaltsstoffen für die Baumischung sowie auch für die Harzkomponente ist sichergestellt, dass sowohl die Baustoffmischung sowie auch die Harzkomponente aus weltweit leicht verfügbaren und kostengünstigen Materialien hergestellt werden kann. Ferner kann der Polymerwerkstoff, insbesondere das Polymerbetonsystem, einfach gemischt und vor Ort verarbeitet werden. Des Weiteren ist aufgrund der vorgesehenen nativen Materialien die Verarbeitung vor Ort sicher, da keine giftigen oder schädlichen Zusatzstoffe vorgesehen sind. Somit ist das System nicht als Gefahrgut einzustufen und kann deshalb gefahrlos transportiert werden. Somit sind beispielsweise auch der See- und Lufttransport sowie andere Transportarten einfacher und wirtschaftlicher zu organisieren.

Des Weiteren kann durch die Verwendung der vorgenannten Zusatzstoffe für die Baumischung sowie auch für den Polymerwerkstoff, insbesondere das Polymerbetonsystem, das System vor Ort einfach gemischt und verarbeitet werden, da die Toleranzen bezüglich der Mischverhältnisse deutlich größer sind als bei Verwendung herkömmlicher Polymersysteme, beispielsweise basierend auf Mineralölepoxid, Bisphenol A, oder Epichlorhydrin. Bevorzugterweise liegen die Toleranzen für sämtliche vorgenannten Mischverhältnisse im Bereich zwischen +/-3 %, ganz besonders bevorzugterweise im Bereich zwischen +/-5 %.

Der vorbeschriebene Polymerwerkstoff, insbesondere das Polymerbetonsystem, weist eine schnelle und formstabile Aushärtung auf. Des Weiteren ist dieser wasserfest sowie auch feuerfest, beziehungsweise flammfest. Unter feuerfest, beziehungsweise flammfest, ist im Sinne dieser Erfindung zu verstehen, dass der Polymerwerkstoff, insbesondere das Polybetonsystem, der Zuführen einer Hitze von mindestens 1000 °C für mehr als 30 Minuten standhält und sich nicht selbst entzündet. Besonders bevorzugterweise hält der vorbeschriebene Polymerwerkstoff, insbesondere das Polymerbetonsystem, einer Hitzezufuhr von mindestens 1600 °C über mindestens 10 Minuten stand, ohne sich selbst zu entzünden.

Die Baustoffmischung zur Herstellung des Polymerwerkstoffs, insbesondere eines Polymerbetonsystems, kann durch folgende Schritte hergestellt werden:
a) Herstellen einer Härterkomponente durch Vermischen einer Polycarbonsäure mit einer Hydroxycarbonsäure, insbesondere Zitronensäure, und Polycarbonsäureanhydrid, wobei die Härterkomponente bei Raumtemperatur als trockene Pulvermischung ausgebildet wird;
b) Herstellen einer Füllstoffkomponente durch Vermischen von Sand, insbesondere Quarzsand, mit Mörtel, insbesondere Zementmörtel, und Stärke, wobei die Füllstoffkomponente bei Raumtemperatur als trockene Pulvermischung ausgebildet wird;
c) Herstellen einer Baustoffmischung durch Vermischen von der in Schritt a) hergestellten Härterkomponente mit der in Schritt b) hergestellten Füllstoffkomponente, wobei die Baustoffmischung bei Raumtemperatur als trockene Pulvermischung ausgebildet wird;

Dabei ist vorzugsweise für die Herstellung der Härterkomponente nach Schritt a) vorgesehen, dass die Polycarbonsäure, insbesondere eine Maleinsäure, mit einem Massenanteil von 30 % bis 60 %, besonders bevorzugterweise zwischen 40 % und 50 %, der Härterkomponente beigefügt wird.

Des Weiteren ist bevorzugterweise vorgesehen, dass die Hydroxycarbonsäure, insbesondere die Zitronensäure, mit einem Massenanteil von 10 % bis 30 %, besonders bevorzugterweise zwischen 15 % und 25 %, der Härterkomponente beigefügt wird.

Des Weiteren ist bevorzugterweise vorgesehen, dass der Härterkomponente Polycarbonsäureanhydrid, insbesondere Pyromellitsäuredianhydrid zugeführt wird. Dabei beträgt der Massenanteil des Polycarbonsäureanhydrids vorzugsweise 20 % bis 40 %, besonders bevorzugterweise 25 % bis 35 % der Härterkomponente.

Ferner ist für die Herstellung der Füllkomponente nach Schritt b) bevorzugterweise vorgesehen, dass der Sand, bevorzugterweise der Quarzsand, mit einem Massenanteil von 10 % bis 30 %, besonders bevorzugterweise 15 % bis 25 %, der Füllstoffkomponente beigefügt wird. Des Weiteren ist bevorzugterweise vorgesehen, dass die Stärke, vorzugsweise Maisstärke, Kartoffelstärke, Weizenstärke, Reisstärke oder Rosskastanienstärke, mit einem Massenanteil von 10 % bis 20 % der Füllkomponente zugeführt wird.

Der Mörtel, insbesondere Zementmörtel, wird der Füllstoffkomponente bevorzugterweise mit einem Massenanteil von 30 % bis 70 %, besonders bevorzugterweise 40 % bis 60 %, zugeführt.

Ferner wird bevorzugterweise der Füllstoffkomponente Quarzmehl zugeführt. Dabei wird der Füllstoffkomponente Quarzmehl mit einem Massenanteil von 10 % bis 20 % zugeführt.

Für die Herstellung der Baustoffmischung in Schritt c) ist vorzugsweise vorgesehen, dass die Härterkomponente mit einem Massenanteil von 10 % bis 30 %, besonders bevorzugterweise 15 % bis 25 %, der Baustoffmischung zugeführt wird. Des Weiteren ist bevorzugterweise vorgesehen, dass die Füllstoffkomponente mit einem Massenanteil von 70 % bis 90 %, besonders bevorzugterweise 60 % bis 80 %, der Baustoffmischung zugeführt wird.

Der Polymerwerkstoff, insbesondere das Polymerbetonsystem, auf Basis nativer, insbesondere auf Basis pflanzlicher, Rohstoffe, kann durch zumindest folgende Schritte hergestellt werden:
a) Herstellen einer Harzkomponente durch Vermischen eines nativen Epoxids auf Basis eines Pflanzenöls mit Polycarbonsäureanhydrid und einem cationisch härtenden Katalysator, wobei die Harzkomponente bei Raumtemperatur als flüssige Mischung ausgebildet wird;
b) Herstellen eines Polymerwerkstoffs durch Vermischen der in Schritt a) hergestellten Harzkomponente mit der vorbeschriebenen Baustoffmischung, wobei die Baustoffmischung mit einem Massenanteil von 80%-95% und die Harzkomponente (12) mit einem Massenanteil von 5%-20% beigemischt werden.

Für die Herstellung der Harzkomponente nach Schritt a) ist bevorzugterweise vorgesehen, dass das native Epoxid auf Basis eines Pflanzenöls, beispielsweise auf Basis von Leinöl, Rapsöl, Sojaöl, Rizinusöl, Drachenkopföl oder Calendulaöl, mit einem Sauerstoffgehalt kleiner als 9 %, besonders bevorzugterweise kleiner als 8 %, sowie ganz besonders bevorzugterweise kleiner als 7 %, der Harzkomponente zugeführt wird.

Des Weiteren ist bevorzugterweise vorgesehen, dass der Harzkomponente das native Epoxid auf Basis eines Pflanzenöls mit einem Massenanteil von 80 % bis 95 % der Harzkomponente zugeführt wird.

Polycarbonsäureanhydrid wird der Harzkomponente bevorzugterweise mit einem Massenanteil von 5 % bis 20 % zugeführt. Der cationisch härtende Katalysator wird dabei der Harzkomponente bevorzugterweise mit einem Massenanteil von 0,1 % bis 1,0 % zugeführt. Bevorzugterweise weist der cationisch härtende Katalysator Triarylsulfoniumhexafluorophosphatesalz und einen Fotoinitiator, insbesondere Propylencarbonat auf.

Der Baustein kann alternativerweise zum Polymerwerkstoff einen Baustoff, insbesondere Beton, aufweisen, wobei der Baustoff ein Bindemittel sowie Dispersionsklebstoff, insbesondere Dispersionsleim, aufweist. Das Bindemittel kann aus jedem geeigneten Rohstoff oder jeder geeigneten Mischung aus Rohstoffen bestehen, welche durch Hinzugabe von Wasser aushärten. Beispielsweise kann das Bindemittel Zement und/oder Gips aufweisen. Somit kann als Bindemittel zum Beispiel Zementmörtel, Schnellzement oder Schnellzementmörtel vorgesehen sein.

Der Dispersionsklebstoff, bevorzugterweise der Dispersionsleim, basiert bevorzugterweise auf nativen Komponenten. Grundsätzlich kann der Dispersionsklebstoff einer Beanspruchungsgruppe D1 bis D4 angehören. Bevorzugterweise ist vorgesehen, dass der Dispersionsklebstoff der Gruppe D3 oder D4 angehört. Die Beanspruchungsgruppen D1 bis D4 beziehen sich auf DIN/EN204. Bei den, den Gruppen D3 oder D4 zugehörigen, Dispersionsklebstoffen handelt es sich um im Wesentlichen wasserfeste Materialien. Diese sind somit auch für Verwendungen vorgesehen, bei welchen Wassereinwirkung nicht ausgeschlossen werden kann.

Bei herkömmlichem Zement-Sand-Wasser-Beton werden Bindemittel, beispielsweise Zement, und Zuschlagsstoffe, beispielsweise Sand, durch Zugabe von Wasser in entsprechender Mindestmenge ausgehärtet. Dispersionsklebstoff, beispielsweise Dispersionsleim, weist Wasser auf. Es hat sich überraschenderweise gezeigt, dass Dispersionsklebstoff bei Reduzierung des Wasseranteils in einer entsprechenden Mindestmenge aushärtet. Durch die Hinzugabe von Dispersionsklebstoff zu einem Bindemittel, beispielsweise Zement, kann auf eine zusätzliche Zugabe von Wasser verzichtet oder die benötigte Menge von zusätzlichem Wasser zumindest reduziert werden. Diese hydrodynamische Dispersion, quasi in symbiotischer Funktion beider Bestandteile, wobei ein Bestandteil abgibt, was der andere Bestandteil zum Aushärten benötigt, lässt in einer Doppelreaktion eine hochfeste Betonvariante entstehen, die ohne Stahlbewährung auskommen kann und wasser-, feuer- sowie säurefest ist.

Bevorzugterweise ist vorgesehen, dass der Baustoff mindestens einen Zuschlagsstoff aufweist, wobei der Zuschlagsstoff Kies, Sand, Mehl, Farbpigmente, Aluminiumhydroxid und/oder einen pflanzlichen Rohstoff, insbesondere Stärke und/oder Faserstoff sein kann. Der Zuschlagsstoff dient dabei als Füllstoff. Bevorzugterweise weist der Füllstoff eine Funktionswirkung auf. Durch das Hinzufügen von Farbpigmenten kann dem Endprodukt beispielsweise ein Farbton gegeben werden. Durch das Hinzufügen von Aluminiumhydroxid kann die Feuerfestigkeit des Endproduktes verbessert werden, da Aluminiumhydroxid als Flammenhemmer wirkt.

Der Zuschlagsstoff könnte beispielsweise Quarzsand und/oder Quarzmehl aufweisen oder aus diesem bestehen. Besonders bevorzugterweise weist der mögliche Zuschlagstoff Sand mit einer im Wesentlichen runden Kornstruktur, beispielsweise "Wüstensand", auf. Des Weiteren könnte ein für den Zuschlagsstoff vorgesehener pflanzlicher Rohstoff Hanffasern und/oder Leinfasern aufweisen.

Ferner kann der Baustoff mindestens eine Zusatzkomponente zur Verstärkung aufweisen. Dabei ist vorgesehen, dass die Zusatzkomponente zum Beispiel Glasfasern aufweist oder aus diesen besteht. Die Zusatzkomponente wirkt somit als verstärkender Hilfsstoff zur Erhöhung der Widerstandsfähigkeit, zum Beispiel des Biegezuges und des Druckes. Die Zusatzkomponente könnte Glasfaserschnitzel oder ein Glasfasergelege, beispielsweise ein leichtes grobmaschiges Glasfasergelege, aufweisen oder aus diesem bestehen.

Der Baustoff härtet in einer Weise aus, die der eines Polymerbetons ähnlich ist. Die vernetzten Bestandteile, zum Beispiel Zuschlagsstoffe und Zusatzkomponenten, werden durch den Dispersionsklebstoff gebunden. Dies wird im Folgenden als äußere Vernetzung bezeichnet. Gleichzeitig aber vernetzt der Bindemittelanteil durch das dem Dispersionsklebstoff entzogene Wasser selbstständig aus. Diese Vernetzung wird im Folgenden als innere Vernetzung bezeichnet. Die Kombination aus beiden parallel ablaufenden Vernetzungsreaktionen ergibt eine hochfeste Materialbindung, die sämtliche Eigenschaften des jeweils einzelnen Bindungstyps (Zement-Sand-Wasser / Polymerharz-Härter) in einem Material vereinigt. Somit entsteht ein Baustoff, insbesondere Beton, welcher feuerfest, wasserfest, hochfest, restflexibel, nicht-toxisch ist sowie kein Gefahrgut darstellt und ohne Stahlbewährung auskommt. Da hierdurch die Eigenschaften unterschiedlicher bekannter Betonklassen vereint werden, wird der resultierende Baustoff im Folgenden als Dispersionsbeton bezeichnet. Durch den vorbeschriebenen Baustoff wird somit eine völlig neue Betonklasse definiert.

Der Baustoff weist den Dispersionsklebstoff bevorzugterweise mit einem Massenanteil zwischen 10% und 50% auf. Besonders bevorzugterweise weist der Baustoff den Dispersionsklebstoff mit einem Massenanteil zwischen 20% und 40%, auf. Des Weiteren ist bevorzugterweise vorgesehen, dass der Baustoff das Bindemittel mit einem Massenanteil zwischen 25% und 90%, sowie besonders bevorzugterweise zwischen 35% und 60% aufweist.

Der Massenanteil von Bindemittel, Zuschlagsstoff und Zusatzkomponente beträgt zusammen bevorzugterweise zwischen 50% und 90%, sowie besonders bevorzugterweise zwischen 60% und 90%. Dabei beträgt der Massenanteil von Zuschlagsstoff und Zusatzkomponente zusammen bevorzugterweise zwischen 5% und 25%.

Grundsätzlich können die Komponenten Bindemittel, Dispersionsklebstoff, Zuschlagsstoff und Zusatzkomponente nahezu beliebig vermischt werden, solange der Massenanteil des Dispersionsklebstoffes nicht höher als 50% ist, da der resultierende Baustoff sonst zu nass wird. Des Weiteren sollte der Massenanteil des Dispersionsklebstoffes nicht kleiner als 10% sein, da der resultierende Baustoff sonst zu trocken ist und nicht homogen aushärtet. Das Material ist prinzipiell kalthärtend.

Zur Erhöhung der Endfestigkeit und Beschleunigung der Härtung kann eine Temperierung des zu härtenden Materials eingesetzt werden. Diese kann vorzugsweise in einem Ofen, aber auch mittels eines Heißluftgebläses auf eine Temperatur von bevorzugterweise über 50°C, sowie besonders bevorzugterweise über 100°C für jeweils mindestens 2 Minuten aber nicht länger als 10 Minuten erwärmt werden. Nach erfolgter Erkaltung erzielt das Material eine erhöhte Bindung in seinen Komponenten bei erhöhter Materialdichte. Dies kann die Festigkeit und Widerstandsfähigkeit des Endprodukts erhöhen.

Der vorbeschriebene Baustoff mit seinen erfindungswesentlichen sowie bevorzugten Bestandteilen ist nach Vernetzung praktisch nicht mehr in der Lage, Wasser von außen aufzunehmen. Die Wasseraufnahme liegt deshalb nach Vernetzung unter 0,1%. Somit liegt Feuchtigkeit nur auf der Oberfläche auf und verdunstet in kürzester Zeit wieder. Die Restflexibilität des Baustoffes ermöglicht es, die unterschiedlichen Temperaturkoeffizienten der einzelnen Komponenten mit oder ohne Stahlbewährung derart flexible mitzugehen beziehungsweise auszugleichen, dass eine Rissbildung deutlich verringert wird. Damit ist die Entstehung von Langfristschäden am fertigen Objekt, welches auf dem vorbeschriebenen Baustoff basiert, deutlich hinausgezögert oder gar unterbunden.

Erfindungsgemäß ist die Verwendung des vorbeschriebenen Baustoffes zur Herstellung von Baukomponenten, beispielsweise Bausteinen, vorgesehen.

Der vorbeschriebene Baustoff ist aufgrund seiner Eigenschaften ein schnelles, hochfestes, feuerfestes, wasserfestes, säurebeständiges und restflexibles Betonsystem, das kein Gefahrgut darstellt und nicht-toxisch wirkt-weder in der Verarbeitung (nass) noch nach Aushärtung.

Erfindungsgemäß ist ein Baustein mit einem vollumfänglich umschlossenen Hohlraum, durch welchen ein Volumen im Inneren des Bausteines definiert wird, vorgesehen, wobei der Baustein durch zumindest die folgenden Schritte hergestellt ist.
a) Herstellen von mindestens zwei Teilen, insbesondere Halbschalen, des Bausteins durch Gießen und anschließendes Aushärten;
b) Verkleben der mindestens zwei Teile miteinander, derart, dass durch diese der vollumfänglich umschlossene Hohlraum gebildet wird;
c) Herstellen einer Durchbrechung durch eine Seitenwand des Bausteins;
d) Einführen eines elastischen Materials eines Verschlussmittels in die Durchbrechung;
e) Durchstechen des elastischen Materials mit einem hohlen stiftförmigen Mittel;
f) Entziehen von Luft aus dem Hohlraum durch das hohle stiftförmige Mittel zur Erzeugung eines Unterdrucks in Bezug auf eine Umgebung bei Normalbedingung;
g) Entfernen des hohlen stiftförmigen Mittels, derart, dass beim Entfernen die Durchbrechung im Wesentlichen luftdicht durch das in der Durchbrechung angeordnete elastische Material verschlossen wird;
h) Verschließen der Durchbrechung mit einer weiteren Komponente des Verschlussmittels, derart, dass die Durchbrechung irreversibel verschlossen wird.

Die vorgenannten Schritte a) bis h) sind nicht notwendigerweise in dieser Reihenfolge durchzuführen. Beispielsweise kann das elastische Material in Schritt e) mit dem hohlen stiftförmigen Mittel bereits vor Einführen des elastischen Materials in die Durchbrechung in Schritt d) durchstochen werden. Des Weiteren könnte beispielsweise die Durchbrechung durch die Seitenwand in Schritt c) bereits während dem Herstellen der mindestens zwei Teile in Schritt a) in den Seitenwandteilen der einzelnen Teile, beispielsweise Halbschalen, hergestellt werden.

Bevorzugterweise kann vor oder nach Herstellen des Unterdrucks in Schritt f) ein Erwärmen oder Erhitzen der zusammengefügten Teile auf eine vorbestimmte Mindesttemperatur sowie ein anschließendes Abkühlen vorgesehen werden. Hierdurch kann die Festigkeit des Bausteins erhöht werden. Zur Erhöhung der Endfestigkeit und Beschleunigung der Härtung kann eine Temperierung des zu härtenden Materials eingesetzt werden. Diese kann vorzugsweise in einem Ofen, aber auch mittels eines Heißluftgebläses auf eine Temperatur von bevorzugterweise über 50°C, sowie besonders bevorzugterweise über 100°C für jeweils mindestens 2 Minuten aber nicht länger als 10 Minuten erwärmt werden. Nach erfolgter Erkaltung erzielt das Material eine erhöhte Bindung in seinen Komponenten bei erhöhter Materialdichte. Dies kann die Festigkeit und Widerstandsfähigkeit des Endprodukts erhöhen.

Des Weiteren ist erfindungsgemäß ein Verfahren zur Herstellung der Bausteine gemäss einem der Ansprüche 1 - 10 bzw. gemäss einem der Ansprüche 11 - 13 mit einem vollumfänglich umschlossenen Hohlraum, durch welchen ein Volumen im Inneren des Bausteines definiert wird, vorgesehen, welches durch zumindest die vorgenannten Schritte a) bis h) gekennzeichnet ist. Vorgesehen ist eine Verwendung des Bausteines beispielsweise für den Hausbau, Hallenbau, Industriebau, Kühlkammerbau, Containerbau, Fundamentbau, Estrichbodenbau, Maschinenfundamentbau, Sonderbau und vieles mehr. Durch die Verwendung des vorbeschriebenen Bausteins kann als Teil der energetischen Ausstattung im Hochbau im Rahmen der Umstellung auf neue Energietechniken ein beträchtlicher Teil beigetragen werden. Beispielsweise wäre es möglich, einen großen Teil der benötigten Heizenergie im privaten, wie im gewerblichen Hausbau einzusparen und somit gar nicht erst entstehen zu lassen. Berechnungen haben ergeben, dass beispielsweise ein 100-m²-Wohnhaus, vollständig mit dem vorbeschriebenen Baustein erstellt, über 90% der Energie eines herkömmlichen Hauses und über 50% der Energie eines Niedrigenergiehauses einsparen kann.

Ein weiterer Vorteil des vorbeschriebenen Bausteins ist, dass die Wandstärke im Vergleich zu herkömmlichen Niedrigenergiehäusern wesentlich geringer, beispielsweise lediglich halb so stark, gehalten werden muss. Somit kann die nutzbare Wohnfläche bei identischer Grundfläche um mehr als 10% vergrößert werden. Des Weiteren sind die Herstellungskosten eines Hauses, welches auf dem vorbeschriebenen Baustein basiert, im Vergleich zu einem herkömmlichen Niedrighaus um über 30% günstiger, da für den Rohbau außer dem Steinsystem im Prinzip keine weiteren Gewerke notwendig sind. Des Weiteren sind keine Fassadenverkleidung, keine Innenauskleidung und keine Innendämmung erforderlich. Lediglich ein Außen- und Innenanstrich wäre nötig, da es in einem System, basierend auf dem vorbeschriebenen Baustein, kein Tauwasser innerhalb der Außenwände entsteht. Ein System, basierend auf dem vorbeschriebenen Baustein, ist deutlich günstiger, was die notwendigen Rohstoffe betrifft, als alle vergleichbar leistungsfähigen Wand- und Isoliersysteme. Die Bauzeit pro Quadratmeter Wandsystem ist deutlich geringer als bei vergleichbar leistungsfähigen Wand- und Isoliersystemen. Somit ist der vorbeschriebene Baustein, insbesondere basierend auf einem Polymerwerkstoff gemäß der Ansprüche 11 bis 19 oder einem Baustoff, insbesondere Dispersionswerkstoff, gemäß der Ansprüche 23 bis 27 eine ideale Systemgrundlage für energetisch hocheffizientes, umweltfreundliches und wirtschaftliches Bauen und somit eine ideale Komponente für den Systembau.

### Figurenbeschreibung

Die Erfindung wird nun mit Bezug auf die begleitenden Zeichnungen beispielhaft erläutert.

Es zeigen schematisch:
- Figur 1: die Herstellungsschritte für die Herstellung der Baustoffmischung sowie für die Herstellung eines Polymerwerkstoffs,
- Figur 2a: einen Polymerbetonbaustein,
- Figur 2b: einen Ausschnitt eines Kamins,
- Figuren 2c - 2e: eine Straßensanierung,
- Figuren 2f - 2h: Gebäudesanierung sowie Holz-Betonverbundteile,
- Figur 3: eine perspektivische Ansicht eines Bausteines,
- Figur 4a: einen Querschnitt einer Gießform zur Herstellung eines halbschalenförmigen Teils eines Bausteines,
- Figur 4b: einen Querschnitt durch einen aus zwei halbschalenförmigen Teilen zusammengesetzten Baustein,
- Figur 4c: eine Draufsicht auf einen halbschalenförmigen Teil eines Bausteines,
- Figur 5: einen Ausschnitt eines aus zwei halbschalenförmigen Teilen zusammengesetzten Bausteines in Querschnittsdarstellung, und
- Figur 6: einen Wandausschnitt in Draufsicht, bestehend aus zwei Bausteinreihen.

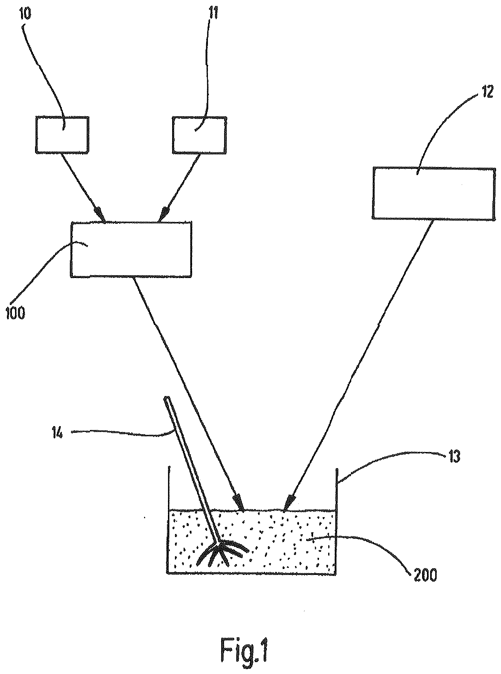

In Figur 1 ist schematisch die Herstellung der Baustoffmischung 100 sowie des Polymerwerkstoffs 200, insbesondere Polymerbetonsystems, gezeigt. Dabei kann die Baustoffmischung 100 unabhängig und separat von der Harzkomponente 12 hergestellt und verpackt werden.

Die Härterkomponente 10 wird durch Vermischen von Polycarbonsäure mit Polycarbonsäureanhydrid und Zitronensäure zu einer trockenen Pulvermischung hergestellt. Die Füllstoffkomponente 11 wird durch Vermischen von Quarzsand mit Quarzmehl und Stärke sowie Zementmörtel zu einer trockenen Pulvermischung hergestellt.

Zur Herstellung der Baustoffmischung 100 als Vormischung werden Härterkomponente 10 mit der Füllstoffkomponente 11 vermischt. Die trockene Pulvermischung kann als Vormischung verpackt und über lange Zeit gelagert werden.

Die Harzkomponente 12 wird durch Vermischen von Leinölepoxid mit einem Sauerstoffgehalt von kleiner als 9,0 % mit Polycarbonsäureanhydrid und einem cationisch härtenden Katalysator hergestellt. Die flüssige resultierende Mischung kann ebenfalls als Vormischung separat verpackt und über längere Zeit gelagert werden. Kurz vor Bedarf und Verwendung des Polymerwerkstoffs 200 werden die Baustoffmischung 100 und die Harzkomponente 12 in einem Behältnis 13, beispielsweise einen Eimer, angemischt. Zur Vermischung dient beispielsweise ein üblicher Rührstab 14.

Nach ca. 2 bis 5 Minuten ist die Mischung homogen und weist einen leicht feuchten Charakter beziehungsweise eine leicht "nasse" Sandmischung auf. Der Polymerwerkstoff 200 kann dann verwendet werden. Je nach Anforderung kann die Mischung zusätzlich mit einer Temperatur, beispielsweise im Bereich zwischen 30 °C und 70 °C beaufschlagt werden. Der Polymerwerkstoff 200 bindet das Material in wenigen Minuten formstabil ab und erreicht in weniger als 1 Stunde ca. 20 % der Endhärte und ist somit bereits begehbar. In weniger als 12 Stunden erreicht der Polymerwerkstoff ca. 80 % seiner Endhärte.

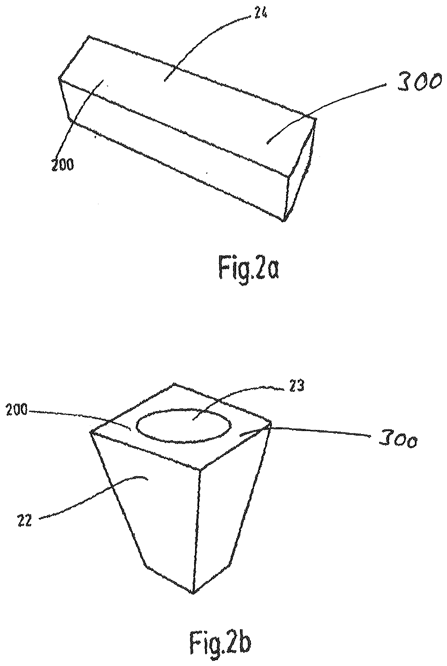

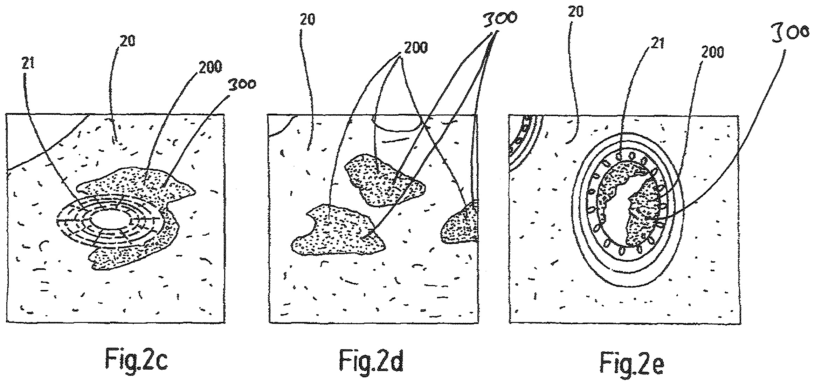

In den Figuren 2a bis 2h sind beispielhaft unterschiedliche Verwendungsmöglichkeiten für den Polymerwerkstoff 200 gezeigt.

Beispielsweise ist in Figur 2a ein Betonbaustein 24 gezeigt, welcher aus dem Polywerkstoff 200 geformt und gefertigt wurde.

In Figur 2b ist der Ausschnitt eines Kamins 22 mit einem Kaminschacht 23 gezeigt. Dies demonstriert beispielhaft die Möglichkeit der Kaminsanierung mit dem vorgeschlagenen Polymerwerkstoff 200.

In den Figuren 2c bis 2e ist beispielhaft die Verwendung des Polymerwerkstoffs 200 für die Straßensanierung gezeigt. Dabei wird an den zu sanierenden Stellen des Straßenbelags 20 der Polymerwerkstoff 200 aufgetragen. Da das Material sehr schnell aushärtet, kann der sanierte Straßenbereich nach kurzer Zeit bereits wieder befahren werden. Um diese Zeit weiter zu verkürzen, können nach Auftragen des Polymerwerkstoffs 200 auf den Straßenbelag 20 die sanierten Stellen mittels Hitzeeinwirkung schneller ausgehärtet werden.

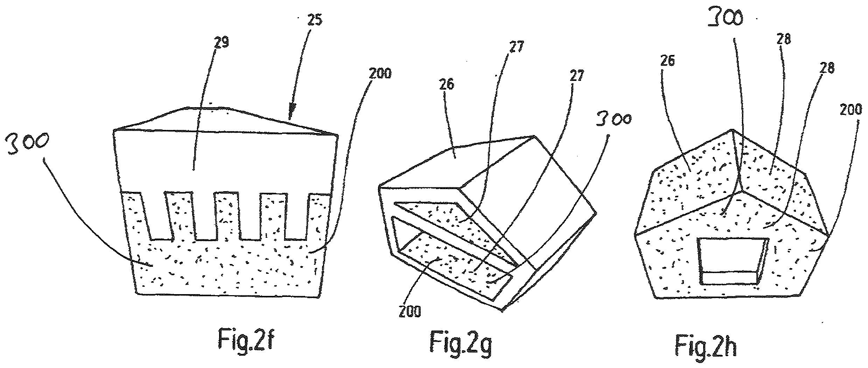

In Figur 2f ist die Verwendung des Polymerwerkstoffs 200 zur Herstellung von Holz-Betonverbundteilen 25 gezeigt. Der vorgeschlagene Polymerwerkstoff 200 weist besonders geeignete Verbundeigenschaften mit anderen Materialien, beispielsweise Holz 29 auf. Des Weiteren ist das vorgeschlagene Polymerwerkstoffsystem 200 im Verbund wesentlich leichter als herkömmliche Holz-Betonsysteme, da zur Herstellung des Verbunds keine oder zumindest weniger zusätzliche Mittel, beispielsweise Verbindungsmittel, notwendig sind. Somit kann insbesondere bei der Altbausanierung oder Denkmalsanierung der vorgeschlagene Polymerwerkstoff 200 eingesetzt werden. Insbesondere wird dies auch dadurch begründet, dass der vorgeschlagene Polymerwerkstoff 200 gegenüber herkömmlichen Polymersystemen, beispielsweise basierend auf Mineralölepoxid, Bisphenol A, Epichlorhydrin, usw., nicht toxisch sowie feuerfest und gleichzeitig wasserfest ist.

Figuren 2g und 2h zeigen ebenfalls die Verwendung des Polymerwerkstoffs 200 für die Gebäudesanierung oder den Gebäudebau. Beispielsweise kann für ein Gebäude 26 der Polymerwerkstoff 200 als Estrich 27 sowie auch als Innenputz und Außenputz 28 verwendet werden.

Sämtliche in den Figuren 2a bis 2h dargestellten beispielhaften Verwendungsmöglichkeiten können analog auch mit dem Baustoff 300 hergestellt werden.

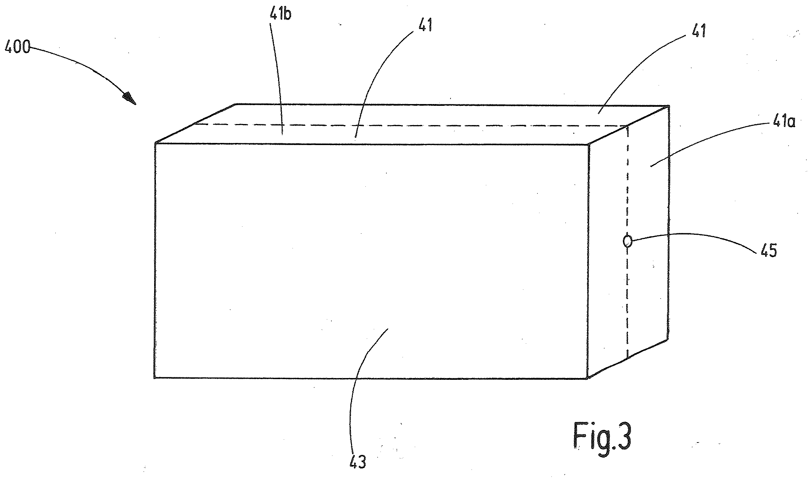

Figur 3 zeigt eine perspektivische Ansicht eines Bausteines 400, aufweisend zwei zusammengesetzte Teile 41, nämlich eine erste Halbschale 41a und eine zweite Halbschale 41b. Der Baustein 400 ist vollumfänglich durch die Außenfläche 43 umschlossen. Im Inneren des Bausteines 400 ist ein Hohlraum 40 (nicht in Figur 3 dargestellt) ausgebildet, wobei im Hohlraum 40 ein Unterdruck gegenüber der Umgebung herrscht. Der Unterdruck wurde nach Zusammensetzen und Verkleben der beiden Halbschalen 41a, 41b des Bausteines 400 dadurch hergestellt, dass eine Durchbrechung 50 durch die Seitenwand 44b hergestellt wurde. In die Durchbrechung 50 ist ein Verschlussmittel 45 eingesetzt, welches ein elastisches Material 46 und ein Abschlusselement 46a aufweist. Das Abschlusselement 46a besteht aus demselben Material wie der Baustein 400.

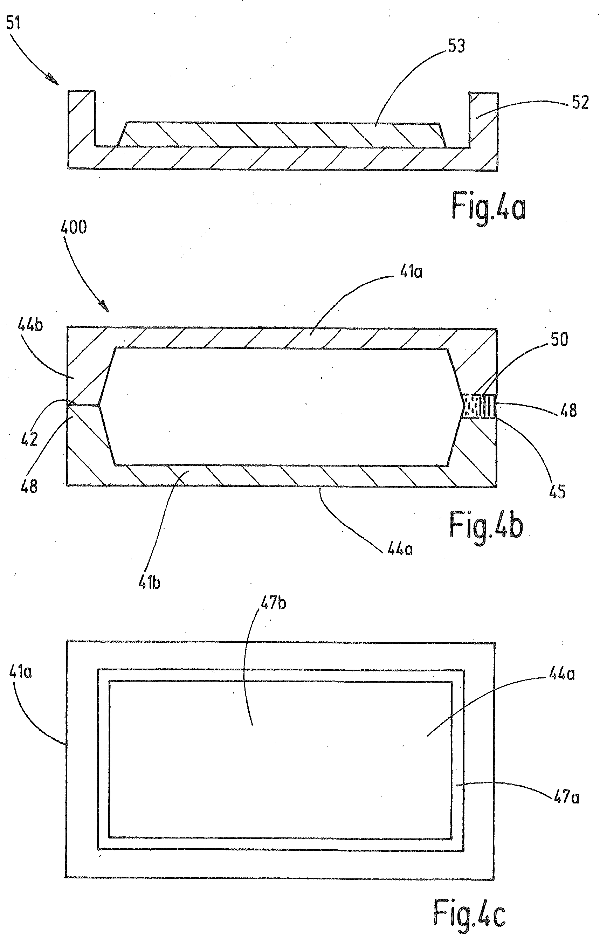

Figur 4a zeigt eine Querschnittsdarstellung einer Gießform 51 zur Herstellung einer Halbschale 41a, 41b des Bausteines 400. Die Gießform 51 weist einen Rahmen 52 sowie eine mittige Erhebung 53 auf. Hierdurch kann ein freier Raum innerhalb der Halbschalen 41a, 41b vorgesehen werden, wodurch nach Zusammensetzen der beiden Halbschalen 41a, 41b ein Hohlraum 40 entsteht.

Figur 4b zeigt eine Querschnittsdarstellung durch einen Baustein 400. Der Baustein 400 ist aus zwei Halbschalen 41a, 41b zusammengesetzt und welche mittels eines Klebemittels 42 miteinander verklebt sind. Ein Verschlussmittel 45, bestehend aus einem elastischen Material 46 und einem Abschlusselement 46a, ist in der Mitte 48 einer Seitenwand 44b des Bausteines 400 angeordnet. Dabei ist das Verschlussmittel 45 in einer Durchbrechung 50 durch die Seitenwand 44b angeordnet.

In Figur 4c ist eine Halbschale 41a, 41b des Bausteines 400 in Draufsicht gezeigt. Die Seitenwand 44a der Halbschale 41a weist zwei Bereiche 47a, 47b mit unterschiedlichen Dicken auf. Ein erster umlaufender und zur Außenkante beabstandeter Bereich 47a weist eine geringere Dicke auf. Ein zweiter Bereich 47b weist eine größere Dicke auf und ist im mittleren Bereich der Seitenwand 44a angeordnet.

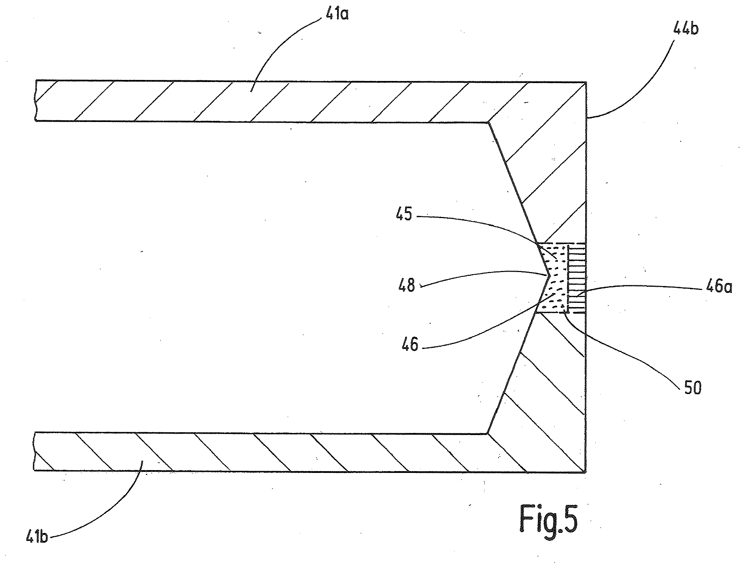

In Figur 5 ist eine vergrößerte Darstellung des Bereiches gezeigt, in welchem die beiden Halbschalen 41a, 41b des Bausteines 400 zusammengesetzt sind und das Verschlussmittel 45 angeordnet ist. Dabei besteht das Verschlussmittel 45 aus einem elastischen Material 46 und einem Abschlusselement 46a. Beide Bestandteile des Verschlussmittels 45 sind in der Durchbrechung 50 durch die Seitenwand 44a des Bausteines 400 angeordnet. Dabei ist das elastische Material 46 über die Hälfte der Dicke der Seitenwand 44b in diesem Bereich angeordnet. Das Abschlusselement 46a des Verschlussmittels 45 besteht aus demselben Material wie die beiden Halbschalen 41a, 41b des Bausteines 400. Das Abschlusselement 46a des Verschlussmittels 45 ist dabei derart in der Durchbrechung angeordnet, dass hierdurch die Durchbrechung vollständig verschlossen wird. Dabei schließt das Abschlusselement 46a innerhalb der Durchbrechung an das elastische Material 46 an und schließt bündig mit der Außenfläche 43 des Bausteines 400 ab.

Die Abmessungen eines Bausteines 400 sowie die Massen des verwendeten Betonmaterials zur Herstellung des Bausteines 400 können beliebig gewählt werden. Beispielsweise könnte ein Baustein 400 ein Gewicht zwischen 12 kg und 15 kg sowie eine Breite von 50 cm, eine Höhe von 25 cm und eine Tiefe von 10 cm aufweisen. Für die Verwendung eines Bausteines 400 zur Herstellung eines Wandsystems 54 ist beispielsweise vorgesehen, dass Bausteine 400 mit unterschiedlichen Maßen verwendet werden. Beispielsweise könnte ein erster Baustein 400 eine Breite von 25 cm, eine Höhe 25 cm und eine Tiefe von 10 cm aufweisen. Ein zweiter Baustein 400 könnte eine Breite von 12,5 cm, eine Höhe von 50 cm und eine Tiefe von 10 cm aufweisen. Des Weiteren könnte ein dritter Baustein 400 eine Breite von 12,5 cm, eine Höhe von 25 cm und eine Tie-fe von 10 cm aufweisen, wobei alle drei Bausteine 400 auf einer identischen Konstruktionsweise basieren. Hierdurch ist ein versetztes Mauern in allen Höhen und Längen möglich. Dabei wird nicht nur die Stabilität erhöht, sondern in erster Linie die Materialbrücken auf weniger als 4% der Wandfläche reduziert. Somit entsteht ein Mauerverbund, der zu 96% einen durchgängigen Hohlraum 40 mit Unterdruck enthält.

Ein Baustein 400 kann beispielsweise eine Außenwandstärke von 6 cm und eine Hohlraumbreite von 4 cm aufweisen. Die Innenwandstärke an den Stirnflächen beziehungsweise Stoßflächen im Bereich der Verklebung zum Nachbarstein beträgt konisch 3 cm bis 4 cm. Ein einzelner Baustein 400 kann somit beispielsweise ein durch den Hohlraum 40 gebildetes Volumen von 4 l in einem Flächenanteil von circa 80% aufweisen. Durch ein versetztes Mauern kann der Flächenanteil mit unterdruckaufweisendem Hohlraum auf 96% der gesamten Wandfläche erhöht und die Materialbrücken auf unter 4% verringert werden. Dies basiert auf einer Wand mit zwei zueinander versetzten Bausteinreihen 55a, 55b. Durch Vorsehen einer dritten oder beliebig weiteren Bausteinreihe 55a, 55b würde dieser Wert weiter reduziert und die Isolierfläche weiter gegen nahe 100% erhöht werden.

Mit einem System, basierend auf dem Baustein 400, können somit isolierende Wände, aber auch Fußbodenflächen, in beliebiger Stärke in versetzten Schichten gemauert werden. Die mittels eines Prisma der üblichen Testmaße von 4 cm x 4 cm x 16 cm (B/H/L) ermittelten Festigkeiten des jeweils verwendeten Materials betragen:
- Druckfestigkeit: bis zu 100 kN pro Quadratmillimeter,
- Biegezugfestigkeit: bis zu 40 kN pro Quadratmillimeter,
- E-Modul: bis zu 45.000.

Hierdurch ist gewährleistet, dass mit den Bausteinen mehrstöckige Häuser gemauert werden können. Die Wandstabilität und Isolierkraft kann durch Erhöhung der Anzahl der zueinander versetzten Bausteinreihen 55a, 55b gesteigert werden.

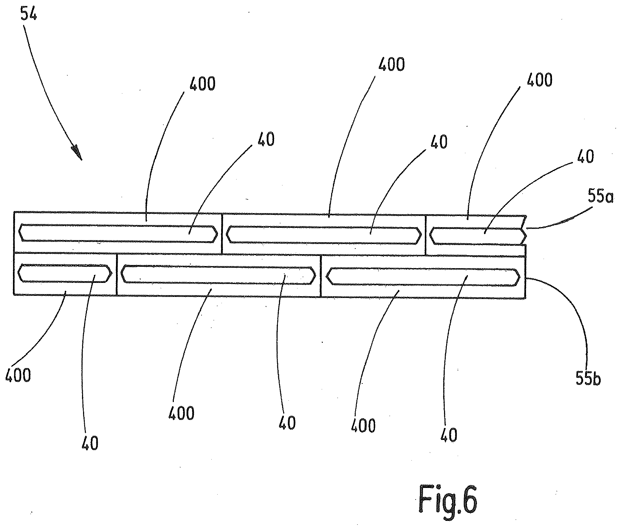

In Figur 6 ist schematisch ein Ausschnitt eines Wandsystems 54 in Draufsicht, bestehend aus zwei Bausteinreihen 55a, 55b, gezeigt. Die Bausteine 400 der beiden Bausteinreihen 55a, 55b sind dabei versetzt zueinander angeordnet, um die effektive Isolierfläche zu erhöhen.

### Bezugszeichenliste

- 100: Baustoffmischung
- 200: Polymerwerkstoff
- 300: Baustoff
- 400: Baustein

- 10: Härterkomponente
- 11: Füllstoffkomponente
- 12: Harzkomponente
- 13: Behältnis
- 14: Rührstab

- 20: Straßenbelag
- 21: Straßenablauf
- 22: Kamin
- 23: Kaminschacht
- 24: Polymerbetonbaustein
- 25: Holz-Betonverbund
- 26: Gebäude
- 27: Estrich
- 28: Außenputz
- 29: Holz

- 30: Bindemittel
- 31: Dispersionsklebstoff
- 32: Zuschlagstoff
- 33: Zusatzkomponente

- 40: Hohlraum
- 41: Teile des Bausteins
- 41a, 41b: Halbschalen des Bausteins
- 42: Klebemittel
- 43: Außenfläche des Bausteins
- 44a, 44b: Seitenwand des Bausteins
- 45: Verschlussmittel
- 46: elastisches Material des Verschlussmittels
- 46a: Abschlusselement des Verschlussmittels
- 47a, 47b: zwei Bereiche einer Seitenwand
- 48: Mitte einer Seitenwand
- 49: hohles stiftförmiges Mittel
- 50: Durchbrechung
- 51: Gießform
- 52: Rahmen
- 53: Erhebung
- 54: Wandsystem
- 55a, 55b: Bausteinreihen

## Patentansprüche

1. Baustein (400) aufweisend einen vollumfänglich umschlossenen Hohlraum (40) durch welchen ein Volumen im Inneren des Bausteins (400) definiert wird, wobei der Baustein (400) im Hohlraum (40) einen Unterdruck in Bezug auf eine Umgebung bei Normalbedingung aufweist, **dadurch gekennzeichnet, dass** der Baustein (400) einen Polymerwerkstoff (200) auf Basis nativer Rohstoffe aufweist oder aus diesem besteht, wobei der Polymerwerkstoff (200) eine Baustoffmischung (100) und eine Harzkomponente (12) aufweist, wobei die Baustoffmischung (100) eine Härterkomponente (10) und eine Füllstoffkomponente (11) aufweist, wobei die Härterkomponente (10) Polycarbonsäure aufweist, wobei die Härterkomponente (10) zusätzlich zur Polycarbonsäure auch Hydroxycarbonsäure aufweist.

2. Baustein (400) gemäß Anspruch 1, **dadurch gekennzeichnet, dass** der Baustein (400) eine Außenfläche (43) aufweist, welche vollumfänglich aus einem einzigen Baustoff, insbesondere Beton, ausgebildet ist, und/oder dass der Baustein (400) in einer Seitenwand (44a, 44b) des Bausteins (400) ein Verschlussmittel (45) aufweist, wobei das Verschlussmittel (45) elastisches Material (46) aufweist, wobei das Verschlussmittel (45) bevorzugterweise irreversibel in der Seitenwand (44a, 44b) des Bausteins (400) angeordnet ist.

3. Baustein (400) gemäß Anspruch 1 oder 2, **dadurch gekennzeichnet, dass** die Härterkomponente (10) zusätzlich Polycarbonsäureanhydrid, insbesondere Pyromellitsäuredianhydrid, vorzugsweise mit einem Massenanteil von 20 % - 40 % aufweist.

4. Baustein (400) gemäß einem der vorhergehenden Ansprüche, **dadurch gekennzeichnet, dass** die Härterkomponente (10) Polycarbonsäure, insbesondere Maleinsäure, mit einem Massenanteil von 30 % - 60 % aufweist, und/oder dass die Härterkomponente (10) Hydroxycarbonsäure, insbesondere Zitronensäure, mit einem Massenanteil von 10 % - 30 % aufweist.

5. Baustein (400) gemäß einem der vorhergehenden Ansprüche, **dadurch gekennzeichnet, dass** die Füllstoffkomponente (11) Quarzsand, vorzugsweise mit einem Massenanteil von 10 % - 30 %, aufweist, wobei der Quarzsand eine Korngröße zwischen 0,1 und 1,0 mm aufweist, und/oder dass die Füllstoffkomponente (11) Quarzmehl, vorzugsweise mit einem Massenanteil von 10 % - 20 %, aufweist, wobei das Quarzmehl eine Korngröße kleiner als 0,074 mm, bevorzugterweise kleiner als 0,037 mm, besonders bevorzugterweise kleiner als 0,0185 mm aufweist.

6. Baustein (400) gemäß einem der Ansprüche 1 bis 4, **dadurch gekennzeichnet, dass** die Füllstoffkomponente (11) des Weiteren Stärke, vorzugsweise mit einem Massenanteil von 10 % - 20 %, aufweist, wobei die Stärke vorzugsweise Maisstärke, Kartoffelstärke, Weizenstärke, Reisstärke oder Rosskastanienstärke aufweist oder aus dieser besteht, und/oder dass die Füllstoffkomponente (11) Mörtel, vorzugsweise mit einem Massenanteil von 30 % - 70 %, aufweist, wobei der Mörtel ein mineralisches Bindemittel, vorzugsweise Zement, Gips, Anhydrit, Magnesit oder Lehm, und/oder ein organisches Bindemittel aufweist.

7. Baustein (400) gemäß einem der vorhergehenden Ansprüche, **dadurch gekennzeichnet, dass** die Baustoffmischung (100) die Härterkomponente (10) mit einem Massenanteil von 10 % - 30 % und die Füllstoffkomponente (11) mit einem Massenanteil von 70 % - 90 % aufweist.

8. Baustein (400) gemäß einem der vorhergehenden Ansprüche, **dadurch gekennzeichnet, dass** die Harzkomponente (12) ein natives Epoxid auf Basis eines Pflanzenöls, vorzugsweise auf Basis von Leinöl, Rapsöl, Sojaöl, Rizinusöl, Drachenkopföl oder Calendulaöl, aufweist, wobei das native Epoxid auf Basis eines Pflanzenöls bevorzugterweise einen Sauerstoffgehalt kleiner 9%, besonders bevorzugterweise kleiner als 8%, ganz besonders bevorzugterweise kleiner als 7%, aufweist.

9. Baustein (400) gemäß einem der vorhergehenden Ansprüche, **dadurch gekennzeichnet, dass** die Harzkomponente (12) das native Epoxid auf Basis eines Pflanzenöls mit einem Massenanteil von 80 % - 95 % aufweist.

10. Baustein (400) gemäß einem der vorhergehenden Ansprüche, **dadurch gekennzeichnet, dass** der Polymerwerkstoff (200) die Baustoffmischung (100) mit einem Massenanteil von 80 % - 95 % und die Harzkomponente (12) mit einem Massenanteil von 5 % - 20 % aufweist.

11. Baustein (400) aufweisend einen vollumfänglich umschlossenen Hohlraum (40) durch welchen ein Volumen im Inneren des Bausteins (400) definiert wird, wobei der Baustein (400) im Hohlraum (40) einen Unterdruck in Bezug auf eine Umgebung bei Normalbedingung aufweist, **dadurch gekennzeichnet, dass** der Baustein (400) einen Baustoff (300) aufweist oder aus diesem besteht, wobei der Baustoff (300) ein Bindemittel (30) und Dispersionsklebstoff (31) aufweist.

12. Baustein (400) gemäß Anspruch 11, **dadurch gekennzeichnet, dass** der Baustein (400) eine Außenfläche (43) aufweist, welche vollumfänglich aus einem einzigen Baustoff, insbesondere Beton, ausgebildet ist, und/oder **dass** der Baustein (400) in einer Seitenwand (44a, 44b) des Bausteins (400) ein Verschlussmittel (45) aufweist, wobei das Verschlussmittel (45) elastisches Material (46) aufweist, wobei das Verschlussmittel (45) bevorzugterweise irreversibel in der Seitenwand (44a, 44b) des Bausteins (400) angeordnet ist.

13. Baustein (400) gemäß Anspruch 11 oder 12, **dadurch gekennzeichnet, dass** der Baustoff (300) den Dispersionsklebstoff (31) mit einem Massenanteil zwischen 10% und 50%, bevorzugterweise zwischen 20% und 40%, aufweist, und/oder dass der Baustoff (300) das Bindemittel (30) mit einem Massenanteil zwischen 25% und 90%, bevorzugterweise zwischen 35% und 60%, aufweist.

14. Verfahren zur Herstellung eines Bausteins (400) gemäss einem der vorhergehenden Ansprüche 1 - 10 oder gemäss einem der vorhergehenden Ansprüche 11 - 13 mit einem vollumfänglich umschlossenen Hohlraum (40) durch welchen ein Volumen im Inneren des Bausteins (400) definiert wird, **dadurch gekennzeichnet, dass** der Baustein (400) durch zumindest folgende Schritte hergestellt wird:
a) Herstellen von mindestens zwei Teilen (41), insbesondere Halbschalen (41a, 41b), des Bausteins (400) durch Gießen und anschließendes Aushärten;
b) Verkleben der mindestens zwei Teile (41) miteinander, derart, dass durch diese ein der vollumfänglich umschlossene Hohlraum (40) gebildet wird;
c) Herstellen einer Durchbrechung (50) durch eine Seitenwand (44a, 44b) des Bausteins (400) ;
d) Einführen eines elastischen Materials (46) eines Verschlussmittels (45) in die Durchbrechung (50);
e) Durchstechen des elastischen Materials (46) mit einem hohlen stiftförmigen Mittel (49);
f) Entziehen von Luft aus dem Hohlraum (40) durch das hohle stiftförmige Mittel (49) zur Erzeugung eines Unterdrucks in Bezug auf eine Umgebung bei Normalbedingung;
g) Entfernen des hohlen stiftförmigen Mittels (49), derart, dass beim Entfernen die Durchbrechung (50) im Wesentlichen luftdicht durch das in der Durchbrechung (50) angeordnete elastische Material (46) verschlossen wird;
h) Verschließen der Durchbrechung (50) mit einer weiteren Komponente des Verschlussmittels (45), derart, dass die Durchbrechung (50) irreversibel verschlossen wird.

## Claims

1. A module (400) having a fully enclosed cavity (40) defining a volume within the module (400), wherein the module (400) in the cavity (40) has a negative pressure relative to an environment under normal conditions, **characterized in that** the module (400) has or consists of a polymer material (200) based on native raw materials, wherein the polymer material (200) has a building material mixture (100) and a resin component (12), wherein the building material mixture (100) has a hardener component (10) and a filler component (11), wherein the hardener component (10) has a polycarboxylic acid, wherein the hardener component (10) also has a hydroxycarboxylic acid, in addition to the polycarboxylic acid.

2. A module (400) according to claim 1, **characterized in that** the module (400) has an outer surface (43), which is formed entirely of a single building material, in particular concrete, and / or that the module (400) in a side wall (44a, 44b) of the module (400) has a closure means (45), wherein the closure means (45) has an elastic material (46), wherein the closure means (45) is preferably irreversibly arranged in the side wall (44a, 44b) of the module (400).

3. A module (400) according to claim 1 or 2, **characterized in that** the hardener component (10) additionally has a polycarboxylic anhydride, in particular a pyromellitic dianhydride, preferably having a mass fraction of 20% -40%.

4. A module (400) according to one of the preceding claims, **characterized in that** the hardener component (10) has a polycarboxylic acid, in particular a maleic acid, having a mass fraction of 30% -60%, and / or that the hardener component (10) has a hydroxycarboxylic acid, in particular a citric acid, with a mass fraction of 10% - 30%.

5. A module (400) according to one of the preceding claims, **characterized in that** the filler component (11) has quartz sand, preferably with a mass fraction of 10% -30%, wherein the quartz sand has a particle size between 0.1 and 1.0 mm, and / or that the filler component (11) has quartz powder, preferably with a mass fraction of 10% -20%, wherein the quartz powder has a particle size less than 0.074 mm, preferably less than 0.037 mm, particularly preferably less than 0.0185 mm.

6. A module (400) according to one of claims 1 to 4, **characterized in that** the filler component (11) additionally has starch, preferably with a mass fraction of 10% -20%, wherein the starch preferably has or consists of corn starch, potato starch, wheat starch, rice starch or horse chestnut starch, and / or that the filler component (11) has mortar, preferably with a mass fraction of 30% -70%, wherein the mortar has a mineral binder, preferably cement, gypsum, anhydrite, magnesite or loam, and / or an organic binder.

7. A module (400) according to one of the preceding claims, **characterized in that** the building material mixture (100) has the hardener component (10) with a mass fraction of 10% -30% and the filler component (11) with a mass fraction of 70% - 90%.

8. A module (400) according to one of the preceding claims, **characterized in that** the resin component (12) has a native epoxide based on a vegetable oil, preferably based on linseed oil, rapeseed oil, soybean oil, castor oil, dragonhead oil or calendula oil, wherein the native epoxide based on a vegetable oil preferably has an oxygen content of less than 9%, more preferably less than 8%, most preferably less than 7%.

9. A module (400) according to one of the preceding claims, **characterized in that** the resin component (12) has the native epoxide based on a vegetable oil with a mass fraction of 80% -95%.

10. A module (400) according to one of the preceding claims, **characterized in that** the polymer material (200) has the building material mixture (100) with a mass fraction of 80% -95% and the resin component (12) with a mass fraction of 5% -20%.

11. A module (400) having a fully enclosed cavity (40) defining a volume within the module (400), wherein the module (400) in the cavity (40) has a negative pressure relative to an environment under normal conditions, **characterized in that** the module (400) has or consists of a building material (300), wherein the building material (300) has a binder (30) and a dispersion adhesive (31).

12. A module (400) according to claim 11, **characterized in that** the module (400) has an outer surface (43), which is formed entirely of a single building material, in particular concrete, and / or that the module (400) in a side wall (44a, 44b) of the module (400) has a closure means (45), wherein the closure means (45) has elastic material (46), wherein the closure means (45) preferably is irreversibly arranged in the side wall (44a, 44b) of the module (400).

13. A module (400) according to claim 11 or 12, **characterized in that** the building material (300) has the dispersion adhesive (31) with a mass fraction between 10% and 50%, preferably between 20% and 40%, and / or that the building material (300) has the binder (30) with a mass fraction of between 25% and 90%, preferably between 35% and 60%.

14. A method of producing a module (400) according to one of the preceding claims 1 to 10 or according to one of the preceding claims 11 to 13, having a fully enclosed cavity (40) defining a volume within the module (400), **characterized in that** the module (400) is produced by at least the following steps:
a) producing at least two parts (41), in particular half-shells (41a, 41b), of the module (400) by casting and subsequent hardening;
b) adhering the at least two parts (41) to one another in such a way that they form the fully enclosed cavity (40);
c) producing an aperture (50) through a side wall (44a, 44b) of the module (400);
d) introducing an elastic material (46) of a closure means (45) into the aperture (50);
e) piercing the elastic material (46) with a hollow pin-shaped means (49);
f) withdrawing air from the cavity (40) through the hollow pin-shaped means (49) to create a negative pressure with respect to an environment under normal conditions;
g) removing the hollow pin-shaped means (49) in such a way that upon removal, the aperture (50) is sealed substantially airtight by the elastic material (46) arranged in the aperture (50);
h) closing the aperture (50) with a further component of the closure means (45), in such a way that the aperture (50) is irreversibly closed.

## Revendications

1. Module (400) comportant une cavité (40) entourée de toute part, laquelle définit un volume à l'intérieur du module (400), le module (400) présentant dans la cavité (40) une dépression par rapport à un environnement dans des conditions normales, **caractérisé en ce que** le module (400) comporte une matière polymère (200) sur base de matières premières natives ou est constitué de cette dernière, la matière polymère (200) comportant un mélange de matériaux de construction (100) et un composant résineux (12), le mélange de matériaux de construction (100) comportant un composant durcisseur (10) et un composant de charge (11), le composant durcisseur (10) comportant de l'acide polycarboxylique, en sus de l'acide polycarboxylique, le composant durcisseur (10) comportant également de l'acide hydroxycarboxylique.

2. Module (400) selon la revendication 1, **caractérisé en ce que** le module (400) comporte une surface extérieure (43) qui est conçue sur toute sa périphérie en un unique matériau de construction, notamment du béton et/ou **en ce que** dans une paroi latérale (44a, 44b) du module (400), le module (400) comporte un moyen de fermeture (45), le moyen de fermeture (45) comportant de la matière élastique (46), le moyen de fermeture (45) étant placé de préférence de manière irréversible dans la paroi latérale (44a, 44b) du module (400).

3. Module (400) selon la revendication 1 ou 2, **caractérisé en ce que** le composant durcisseur (10) comporte en sus notamment du dianhydride pyromellitique, de préférence dans une part en masse de 20 % à 40 %.

4. Module (400) selon l'une quelconque des revendications précédentes, **caractérisé en ce que** le composant durcisseur (10) comporte de l'acide polycarboxylique, notamment de l'acide maléique, dans une part en masse de 30 % à 60 % et/ou **en ce que** le composant durcisseur (10) comporte de l'acide hydroxycarboxylique, notamment de l'acide citrique, dans une part en masse de 10 % à 30 %.

5. Module (400) selon l'une quelconque des revendications précédentes, **caractérisé en ce que** le composant de charge (11) comporte du sable quartzeux, de préférence dans une part en masse de 10 % à 30 %, le sable quartzeux présentant une grosseur de grains comprise entre 0,1 et 1,0 mm et/ou **en ce que** le composant de charge (11) comporte de la poudre de quartz, de préférence dans une part en masse de 10 % à 20 %, la poudre de quartz présentant une grosseur de grains inférieure à 0,074 mm, de préférence inférieure à 0,037 mm, de manière particulièrement préférentielle, inférieure à 0,0185 mm.

6. Module (400) selon l'une quelconque des revendications 1 à 4, **caractérisé en ce que** le composant de charge (11) comporte par ailleurs de l'amidon, de préférence dans une part en masse de 10 % à 20 %, l'amidon comportant de préférence de l'amidon de maïs, de la fécule de pommes de terre, de l'amidon de blé, de l'amidon de riz ou de l'amidon du marron d'inde ou étant constitué de ces derniers, et/ou **en ce que** le composant de charge (11) comporte du mortier, de préférence dans une part en masse de 30 % à 70 %, le mortier comportant un liant minéral, de préférence du ciment, du plâtre, de l'anhydrite, de la magnésite ou de l'argile et/ou un liant organique.

7. Module (400) selon l'une quelconque des revendications précédentes, **caractérisé en ce que** le mélange de matériaux de construction (100) comporte le composant durcisseur (10) dans une part en masse de 10 % à 30 % et le composant de charge (11) dans une part en masse de 70 % à 90 %.

8. Module (400) selon l'une quelconque des revendications précédentes, **caractérisé en ce que** le composant résineux (12) comporte un époxy natif sur base d'une huile végétale, de préférence sur base d'huile de lin, d'huile de colza, d'huile de soja, d'huile de ricin, d'huile de tête de dragon ou d'huile de calendula, l'époxy natif sur la base d'une huile végétale faisant preuve de préférence d'une teneur en oxygène inférieure à 9 %, de manière particulièrement préférentielle inférieure à 8 %, de manière tout particulièrement préférentielle, inférieure à 7 %.

9. Module (400) selon l'une quelconque des revendications précédentes, **caractérisé en ce que** le composant résineux (12) comporte l'époxy natif sur la base d'une huile végétale dans une part en masse de 80 % à 95 %.

10. Module (400) selon l'une quelconque des revendications précédentes, **caractérisé en ce que** la matière polymère (200) comporte le mélange de matériaux de construction (100) dans une part en masse de 80 % à 95 % et le composant résineux (12) dans une part en masse de 5 % à 20 %.

11. Module (400) comportant une cavité (40) entourée de toute part, laquelle définit un volume à l'intérieur du module (400), le module (400) présentant dans la cavité (40) une dépression par rapport à un environnement dans des conditions normales, **caractérisé en ce que** le module (400) comporte un matériau de construction (300) ou est constitué de ce dernier, le matériau de construction (300) comportant un liant (30) et un agent adhésif en dispersion (31).

12. Module (400) selon la revendication 11, **caractérisé en ce que** le module (400) comporte une surface extérieure (43), laquelle est conçue sur toute sa périphérie en un matériau de construction unique, notamment du béton et/ou **en ce que** dans une paroi latérale (44a, 44b) du module (400), le module (400) comporte un moyen de fermeture (45), le moyen de fermeture (45) comportant de la matière élastique (46), le moyen de fermeture (45) étant placé de préférence de manière irréversible dans la paroi latérale (44a, 44b) du module (400).

13. Module (400) selon la revendication 11 ou 12, **caractérisé en ce que** le matériau de construction (300) comporte l'agent adhésif en dispersion (31) dans une part en masse comprise entre 10 % et 50 %, de manière préférentielle entre 20 % et 40 % et/ou **en ce que** le matériau de construction (300) comporte le liant (30) dans une part en masse comprise entre 25 % et 90 %, de manière préférentielle entre 35 % et 60 %.

14. Procédé destiné à fabriquer un module (400) selon l'une quelconque des revendications 1 à 10 précédentes ou selon l'une quelconque des revendications 11 à 13 précédentes, avec une cavité (40) entourée de toute part, laquelle définit un volume à l'intérieur du module (400), **caractérisé en ce qu'**on fabrique le module (400) à l'aide d'au moins les étapes suivantes :
a) de la fabrication d'au moins deux pièces (41), notamment des demi-coques (41a, 41b) du module (400) par coulée et solidification successive ;
b) du collage des au moins deux pièces (41) l'une avec l'autre, de telle sorte qu'elles forment la cavité (40) entourée de toute part ;
c) de la création d'un ajour (SO) à travers une paroi latérale (44a, 44b) du module (400) ;
d) de l'introduction d'une matière élastique (46) d'un moyen de fermeture (45) dans l'ajour (50) ;
e) du perçage de la matière élastique (46) avec un moyen creux (49) en forme de tige ;
f) du soutirage d'air hors de la cavité (40) à travers le moyen creux (49) en forme de tige pour générer une dépression par rapport à un environnement dans des conditions normales ;
g) du retrait du moyen creux (49) en forme de tige, de telle sorte que lors du retrait, l'ajour (50) soit fermé de manière sensiblement étanche à l'air par la matière élastique (46) placée dans l'ajour (50) ;
h) de la fermeture de l'ajour (50) à l'aide d'un composant supplémentaire du moyen de fermeture (45) de sorte à fermer irréversiblement l'ajour (50).
